(19) Europäisches Patentamt / European Patent Office / Office européen des brevets

(11) **EP 2 128 092 A1**

(12) **EUROPEAN PATENT APPLICATION**

(43) Date of publication:
**02.12.2009 Bulletin 2009/49**

(51) Int Cl.:
***C01B 33/20*** (2006.01)

(21) Application number: **08156723.2**

(22) Date of filing: **22.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Universität Potsdam**
**14469 Potsdam (DE)**

(72) Inventors:
• **Taubert, Andreas**
 **14471, Potsdam (DE)**

• **Li, Zhonghao**
 **School of materials science and engineering**
 **Shandong University**
 **Jinan, Shandong Province, 250061 (CN)**

(74) Representative: **Hengelhaupt, Jürgen et al**
 **Gulde Hengelhaupt Ziebig & Schneider**
 **Patentanwälte - Rechtsanwälte**
 **Wallstrasse 58/59**
 **10179 Berlin (DE)**

Remarks:
Amended claims in accordance with Rule 137(2) EPC.

(54) **Zinc silicate microcrystals and method of preparation**

(57) At elevated temperatures, the strongly hydrated ionic liquid tetrabutylammonium hydroxide reacts with zinc acetate and amorphous $SiO_2$. This reaction yields well-defined microcrystals with complex morphologies including hemimorphite $Zn_4Si_2O_7(OH)_2*n\,H_2O$ and willemite $Zn_2SiO_4$ phases. Their morphology can be adjusted by variation of the reaction time and reaction temperature and the hemimorphite can be transformed to $Zn_2SiO_4$ via calcination. The process is therefore a viable approach for the fabrication of porous films on e.g. glass surfaces with potential applications as catalyst support, among others.

**EP 2 128 092 A1**

**Description**

The present invention refers to zinc silicate microcrystals, a corresponding preparation method, and a specific use of the zinc silicate microcrystals.

**Background of the Invention and State of Art**

Inorganic synthesis in ionic liquids (ILs) has attracted quite some interest over the last few years. Originally, ILs have been used as solvent and solvent/templates for the fabrication of sometimes unprecedented inorganic structures. More recently, ILs and ionic liquid crystals (ILCs) have been designed such that they act as solvent-reactant-templates, that is, the IL is the solvent, the template, and the reactant for the controlled formation of an inorganic material at the same time. These reactive IL(C)s have been termed ionic liquid crystal precursors (ILCPs) and ionic liquid precursors (ILPs), respectively. For example, ILCPs were used for the fabrication of CuCl platelets (Taubert, A.; Palivan, C.; Casse, O.; Gozzo, F.; Schmitt, B. J. Phys. Chem. C 2007, 111, 4077) or Au platelets (Taubert, A.; Arbell, I.; Mecke, A.; Graf, P. Gold Bulletin 2006, 39, 205).

Of particular interest to the current work is a report by Zhu *et al.*, who have shown that tetraalkylammonium zinc complex/tetramethylammonium hydroxide mixtures are ILPs for the ionothermal synthesis of well-defined ZnO microparticles (Zhu, H.; Huang, J.-F.; Pan, Z.; Dai, S. Chem. Mater. 2006, 18, 4473). The present inventors have extended this approach and shown that the strongly hydrated IL tetrabutylammonium hydroxide (TBAH), that is, the butyl analog of the hydroxide compound used by Zhu *et al.*, can be used for the fabrication of ZnO/carbohydrate hybrid materials. Furthermore, unique hollow zinc oxide mesocrystals can also be grown by reaction of TBAH with zinc acetate (Li, Z.; Geßner, A.; Richters, J.-P.; Kalden, J.; Voss, T.; Kübel, C.; Taubert, A. Adv. Mater. 2008, 20, 1279).

Especially silicate microcrystals showing a significant stability of the morphology against thermal treatment and providing an enlarged surface are of interest with respect to the use of the material as catalyst or as a catalyst substrate.

**Summary of Invention**

According to an aspect of the invention, there is provided a method of preparation of zinc silicate microcrystals. The method includes the steps of:

   (i) preparing an ionic liquid comprising or composed of $Zn(OAc)_2$ dihydrate and tetrabutyl ammonium hydroxide (TBAH, $N(C_4H_9)_4OH*30\ H_2O$);
   (ii) subsequent or simultaneously to step (i), adding a source of amorphous $SiO_2$ to the ionic liquid; and
   (iii) heating of the ionic liquid such that a surface temperature of the amorphous $SiO_2$ source is in a range from 130°C to 180°C.

It has been shown that the use of the reactive ionic liquid TBAH leads to zinc silicates microcrystals with uniform and complex morphologies. The zinc silicates microcrystal formation is controllable if the surface temperature of the amorphous $SiO_2$ source is in between the given range.

Preferably, the surface temperature of the amorphous $SiO_2$ source in step (iii) is in a range from 130°C to 160°C.

The step (iii) of heating is preferably maintained for at least 10h. In particular, the heating is maintained for duration in the range of 15h to 120h.

The method may further comprise the step of:

   (iv) subsequent to step (iii), separation of the precipitate from the ionic liquid and calcination of the precipitate.

It has been shown that the calcination only weakly affected the morphology of the crystals. A temperature during the step (iv) of calcination may be in the range of 300°C to 1.500°C. In particular, the temperature during the calcination is set to 550°C or more to completely convert a hemimorphite $Zn_4Si_2O_7(OH)_2*n\ H_2O$ into willemite $Zn_2SiO_4$. Most preferred, the temperature during the calcination is in the range of 600°C to 1.000°C.

In the present preparation method, any source of amorphous $SiO_2$ is in principle useful as far as additional components of these sources do not have an influence on the desired reaction. Preferably, the source of amorphous $SiO_2$ is a silicate glass, for example a borosilicate glass. The source of amorphous $SiO_2$ may be a $SiO_2$ particle and the zinc silicate microcrystals may then grow on an outer surface of these particles. Preferably, monodispers $SiO_2$ particles are used as a source of amorphous $SiO_2$. These monodispers particles may have a diameter from 10 nm to 50 $\mu$m. Hence, another aspect of the invention refers to $SiO_2$ particles with a surface, which at least in parts is composed of zinc silicate microcrystals.

According to another aspect of the invention, there are provided zinc silicate microcrystals produced by the above mentioned method.

According to a further aspect of the invention, there are provided zinc silicate microcrystals comprising:

a) a phase of willemite $Zn_2SiO_4$;
b) a phase of ZnO and/or $\gamma$-$Zn(OH)_2$; and
c) optionally, a phase of hemimorphite $Zn_4Si_2O_7(OH)_2*n\,H_2O$.

The hemimorphite $Zn_4Si_2O_7(OH)_2*n\,H_2O$ may be completely converted into willemite $Zn_2SiO_4$ via calcination.

The microcrystals preferably have a morphology which comprises rectangular plate-like crystals. The rectangular plate-like crystals may especially have a length of 100 nm or more. A plurality of the rectangular plate-like crystals may be preferably combined to an overall morphology showing a dumbbell-like structure. In alternative, the microcrystals may have a sponge-like morphology.

Another aspect of the invention refers to the use of the above mentioned zinc silicate microcrystals as a catalyst or a substrate for a catalyst. The zinc silicate microcrystals have a very large surface, thus especially offering an opportunity for heterogeneous catalytic reactions.

**Brief Description of the Drawings**

Figure 1 shows representative X-ray diffraction (XRD) patterns of several samples of zinc silicate microcrystals.
Figure 2 shows $^1$H-NMR and $^{29}$Si MAS NMR spectra of a sample.
Figure 3 shows $^1$H-$^{29}$Si Heteronuclear Correlation (HETCOR) spectra of a sample;
Figure 4 shows SEM and EDXS data of the as-precipitated zinc silicate after 20 hours of reaction time.
Figure 5 shows a transmission electron microscopy (TEM) image of a sample isolated after 30 hours.
Figure 6 shows SEM images of calcinated samples.
Figure 7 shows thermogravimetric analysis (TGA) and derivative (DTG) data from an as-precipitated sample.
Figure 8 shows representative XRD patterns from samples isolated after 20 and 30 hours.
Figure 9 shows SEM images of powders isolated after different reaction times.
Figure 10 summarizes the different reaction conditions that lead to the different morphologies.
Figure 11 shows a SEM image of a sample obtained at 150 to 155 °C after 30 hours.
Figure 12 shows a suggested growth mechanism at 130 °C.

**Detailed Description of the Invention**

In the following, the method of preparation of zinc silicate microcrystals according to the invention will be described in an example. An influence of the reaction temperature and reaction time will be demonstrated in examples. The achieved zinc silicate microcrystals are characterized in detail.

**Experimental**

**Mineralization.** In a typical experiment, 5 g of tetrabutyl ammonium hydroxide (TBAH, $N(C_4H_9)_4OH*30\,H_2O$ Aldrich 86866, m.p. 26 - 28 °C) were heated in a 25 mL flask to approximately 50°C until the IL was liquid. The flask is made of commercial available borosilicate glass. Then the flask was cooled to approximately 30°C by immersing in a water bath for a few minutes. Subsequently, 50 mg of $Zn(OAc)_2$ dihydrate (Aldrich) were added and the mixture was sonicated until the solution was clear. The flask was immersed in the oil bath such that also the volume of the flask above the reacting liquid was immersed in the oil bath. The samples were refluxed for 30 h. The glass wall temperature inside the flask was 130 to 135 °C. After eight to ten hours, a white precipitate appeared and the solutions remained slightly turbid until the end of the reaction. After about twelve hours, a thick white film formed on the glass walls of the flask. After 30 hours, the white solid was recovered via centrifugation, washing with water and ethanol, and drying at 60 °C.

**Characterization.** X-ray diffraction was done on a Nonius PDS 120 with CuK$\alpha$ radiation and position sensitive detector and on a Nonius D8 with CuK$\alpha$ radiation. SEM was done on a Philips XL-30 ESEM operated at 10 kV and on a LEO 1550 Gemini operated at 20 kV. Samples were sputtered with Au or Pt (Philips) or Au/Pt (LEO) prior to imaging. EDX spectra were acquired with an EDAX DX-4 system. TEM was done on a Zeiss 912 Omega operated at 120 kV. Thermogravimateric analysis (TGA) was performed on a Netzsch 209 thermobalance. The samples were examined at a heating rate of 5 °C/min in air. Atomic absorption spectroscopy (AAS) was done on a Jobin Yvon ICP-OES JY 38 Plus.

Solid-state NMR experiments were conducted at 9.4 T using a Bruker DSX-400 spectrometer equipped with a $^1$H/X/Y probe using zirconia rotors of 4 mm in diameter. $^1$H MAS NMR spectra were acquired at 400.16 MHz with a $^1$H

...

π/2 pulse length of 2.8 $\mu$s at a MAS rate of 15 and 30 kHz and a recycle delay of 15 s. Fast MAS NMR spectra were recorded using a $^1$H/X probe-head using zirconia rotors of 2.5 mm in diameter. The position of the $^1$H resonances is quoted in ppm from external TMS.

$^1$H-$^{29}$Si cross polarization (CP) MAS NMR spectra were acquired at 400.16 MHz for $^1$H and 78.5 MHz for $^{29}$Si at a MAS rate of 10.0 kHz. A $^1$H π/2 pulse length of 3.1 $\mu$s, a recycle delay of 10 s, and TPPM decoupling were used during acquisition. The CP contact time was set to 2.0 ms with the Hartmann-Hahn matching condition set using kaolinite. The $^{29}$Si chemical shifts are quoted in ppm with respect to TMS.

$^{29}$Si single pulse (SP) MAS spectra were acquired at 78.5 MHz at a MAS rate of 10.0 kHz. A $^{29}$Si π/3 pulse length of 2.3 $\mu$s with a recycle delay of 240 s without proton decoupling, were used for acquisition. The $^{29}$Si chemical shifts are quoted in ppm with respect to TMS.

The $^1$H-$^{29}$Si VCT (variable contact time) CP MAS NMR was conducted using the same conditions as the $^1$H $^{29}$Si CP MAS with contact times ranging from 0.05 to 15.0 ms. The data was fitted according to the I-S model using equation 1. The parameter, $T_{IS}$ is the CP time constant and is a measure of CP magnetization transfer efficiency from spin $I$ ($^1$H) to spin S ($^{29}$Si). No decay of intensity of peaks has been observed and the kinetics curves were analyzed using a simplified equation:

$$I(t) = I_0 \left( 1 - \exp\left( -\frac{t}{T_{CP}} \right) \right) \qquad \text{(Eq. 1)}$$

2D $^1$H-$^{29}$Si Heteronuclear correlation (HETCOR) MAS NMR spectra were acquired at 400.16 MHz for $^1$H and 78.5 MHz for $^{29}$Si with a MAS rate of 10 kHz. The 2D HETCOR experiments used Frequency-Switched Lee-Goldburg (FSLG) homonuclear decoupling with a $^1$H *rf* field of *ca*. 80.6 kHz in $t_1$ and ramp-amplitude $^1$H-$^{29}$Si cross-polarization with a contact time of 2 ms. TPPM decoupling was used during acquisition at a decoupling strength of *ca*. 80.6 kHz. The sample volume was restricted to the middle of the rotor to improve the *rf* homogeneity. States-TPPI was employed for phase sensitive detection. The recycle delay was set at 3.0 s. 256 increments were recorded in $t_1$ to cover the full $^1$H spectral width, with 600 scans acquired in $t_2$ per increment.

## Results and Discussion

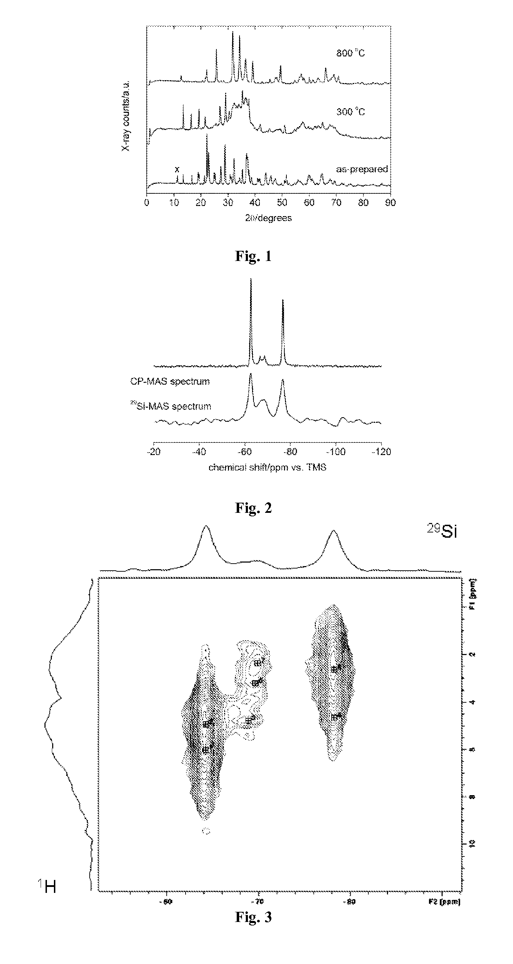

Figure 1 shows representative X-ray diffraction (XRD) patterns of a precipitate and the same sample after calcination at 300 and 800 °C, respectively, wherein (x) denotes the γ-Zn(OH)$_2$ 110 reflection. XRD shows that after 30 hours of reaction at 130 to 135 °C (temperature of the glass wall of the reaction vessel), the precipitate appears well-crystallized, which is evidenced by the narrow reflections. Analysis of the powder pattern however reveals that the sample is a mixture of hemimorphite $Zn_4Si_2O(OH)_2$*n $H_2O$ (JCPDS 00-05-0555), willemite (JCPDS 00-037-01485), and γ-Zn(OH)$_2$ (JCPDS 00-020-1437).

Calcination between 300 and 500 °C leads to a rather complex mixture of hemimorphite, zincite ZnO, and willemite $Zn_2SiO_4$. Calcination at 600 °C completely transforms the hemimorphite precursor into willemite. Here, the reflections in the XRD patterns are rather broad, which indicates the presence of small crystallites, a large number of defects, or the presence of multiple structures that could not be identified.

The reflection at 11° 2θ in the XRD pattern of the as-precipitated sample is the 110 reflection of γ-zinc hydroxide. Its absence after calcination even at only 300 °C shows that, unlike the silicates, the transformation of zinc hydroxide into zincite can, as expected, be achieved at relatively low temperatures.

Calcination at 700 °C and higher leads to willemite and zincite and the XRD patterns show relatively narrow and well-developed reflections. This indicates that here the crystals have much larger coherence lengths and much less defects than samples clacined at lower temperature. These data also clearly show that unlike the transformation of Zn(OH)$_2$ to ZnO, the transformation of the hemimorphite component of the sample to willemite requires higher temperatures.

Figure 2 shows $^1$H-NMR and $^{29}$Si MAS NMR spectra of an as-prepared sample. While XRD experiments suggest that the as-prepared sample consists of the compounds hemimorphite $Zn_4Si_2O_7(OH)_2$*n $H_2O$, willemite $Zn_2SiO_4$, and γ-zinc hydroxide, SSNMR clearly shows that there are several species present. The peak at -76.8 ppm can be assigned to $Q^1$ silicate units in hemimorphite and the peak at -66 ppm is due to the presence of willemite. The downfield resonances fall in the chemical shift range characteristic of $Q^0$ silicate units, but the assignment of the peak at -62.7 ppm is unclear.

The $^{29}$Si chemical shifts in zinc silicates depends on the degree of condensation of silicate units, the Si-O-Si angles and number of Zn atoms in the first coordination sphere of silicon. The very slow $^1$H-$^{29}$Si CP/MAS kinetics with long $T_{cp}$ times suggests that peaks at -62.7 and -76.8 ppm correspond to silica units which do not bear protons in close proximity to silicon atoms (see electronic supporting information). The peaks at - 66.5 and -68.5 ppm feature much faster CP-kinetics. This indicates much stronger $^1$H-$^{29}$Si heteronuclear dipolar interactions which can be explained by the shorter $^1$H-$^{29}$Si distances.

The $^1$H source for the as-synthesized materials mainly consists of Si-OH protons and protons from water molecules in the structure as suggested by the values of $^1$H chemical shifts for the main broad resonances.

The nature of the connectivities in the precipitate was probed using $^1$H-$^{29}$Si Heteronuclear Correlation (HET-COR) spectroscopy (Fig. 3). Two broad lines in the $^1$H dimension correlate with different $^{29}$Si sites. The main $^{29}$Si resonances at -62 and - 78 ppm show most intense correlating cross-peaks with different proton resonances, indicating that these silicon sites are present in different structures. On the other hand the $^{29}$Si peaks at -78 and -68 ppm show the most intense cross-peaks with identical $^1$H sites. A similar pattern is observed for the $^{29}$Si sites at -62 and -64 ppm indicating that these peaks represent identical phases. One should bear in mind that the broadness of $^1$H lines makes the assignment additionally difficult.

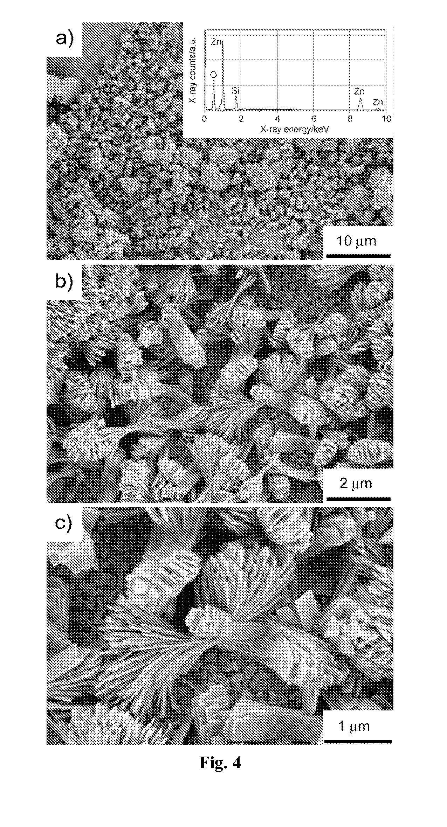

Energy dispersive X-ray spectroscopy (EDXS, see Figure 4) only detects Si, Zn, and O and hence supports our XRD and SSNMR structure assignment. The chemical composition of the precipitates has been further confirmed by atomic absorption spectroscopy (AAS). Table 1 summarizes the sample compositions as determined from SSNMR and XRD experiments (Crystal structures as a function of calcination temperature $T_{calc}$. determined from XRD and SSNMR).

| $T_{calc}$. | Phase 1 | Phase 2 | Phase 3 |
|---|---|---|---|
| --- | $Zn_4Si_2O_7(OH)_2{}^*n\,H_2O$ | $Zn_2SiO_4$ | $\gamma$-$Zn(OH)_2$ |
| 300 | $Zn_4Si_2O_7(OH)_2{}^*n\,H_2O$ | $Zn_2SiO_4$ | ZnO |
| 400 | $Zn_4Si_2O_7(OH)_2{}^*n\,H_2O$ | $Zn_2SiO_4$ | ZnO |
| 500 | $Zn_4Si_2O_7(OH)_2{}^*n\,H_2O$ | $Zn_2SiO_4$ | ZnO |
| 600 | | $Zn_2SiO_4$ | ZnO |
| 700 | | $Zn_2SiO_4$ | ZnO |
| 800 | | $Zn_2SiO_4$ | ZnO |
| 1000 | | $Zn_2SiO_4$ | ZnO |

Figure 4 shows scanning electron microscopy (SEM) images of the precipitates. SEM reveals that the samples have a rather complex morphology after 20 hours of reaction time. The as-prepared precipitate consists of near-rectangular plate-like crystals, which have grown into a dumbbell-like overall morphology. The dumbbells are composed of individual, well-developed, rectangular plates with lengths of up to a few hundred nanometers. This morphology is strikingly different from zinc silicates reported in the literature. Roy et al. reported the formation of spherical particles with a diameter of ca. 50 nm (Roy, A.; Polarz, S.; Rabe, S.; Rellinghaus, B.; Zähres, H.; Kruis, F. E.; Driess, M. Chem. Eur. J. 2004, 10, 1565). Wei et al. reported the formation of wires with a length of up to several micrometers (Wei, Q.; Meng, G.; Ye, M.; An, X.; Hao, Y.; Zhang, L. J. Phys. Chem. C 2007, 111, 1924).

In part this different morphology can be assigned to the different synthesis process. Our materials are grown in a hydrated ionic liquid at moderate temperatures and ambient pressure. The other materials are made via chemical vapor synthesis from an organometallic single-source precursor or via a thermal evaporation and condensation process. This completely different approach makes a comparison difficult, yet it also shows that our approach is a viable option for the fabrication of zinc silicates microcrystals with completely different morphological characteristics.

The complex shape of the precipitates with plates that grow in the same general direction, but start to branch with increasing distance from the center, suggests that the particles form to some extent via self-similar growth. This is qualitatively similar to fluorapatite, calcium carbonate, barium carbonate, and barium sulfate, which have also been reported to form via self-similar growth in the presence of polymeric additives.

Here, SEM provides clear evidence for a self-similar growth and the present invention is therefore the first example of self-similar crystallization from an IL. To date the driving force for the complex architecture of the precipitates is not clear yet. However, willemite has a polar crystal lattice, which could account for a similar growth mode. Hemimorphite also has a polar lattice, and (in geological species) tends to grow as thin, tabular crystals that show hemimorphism (different crystal terminations on either end of the prism form).

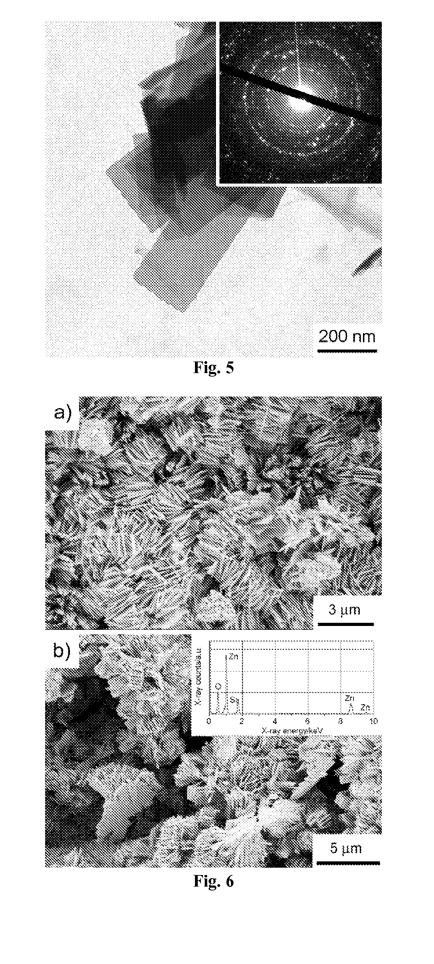

Figure 5 shows a transmission electron microscopy (TEM) image of a sample isolated after 30 hours. The individual platelets have a well-developed shape with sharp edges. The uniform gray level of individual particles indicates that their thickness is essentially the same over the whole platelet and the absence of bend contours shows that the platelets are, unlike many metal nanoplates, stiff enough to not bend significantly on the TEM grid. Electron diffraction confirms the crystallinity of the sample. The morphology of the plates observed in both SEM and TEM experiments strongly suggests a single crystalline nature of the individual plates.

The presumed single crystal nature of the plates raises the question whether or not individual plates are composed of both silicates and γ-zinc hydroxide or each plate is a single phase compound.

Figure 6 shows SEM images of calcined samples (SEM images after calcination at (a) 300 and (b) 800 °C. Inset: EDX spectrum of the sample calcined at 800 °C). SEM shows that the particle morphology is only weakly affected by calcination. The only qualitative difference is that the plates appear to have sharper contours than before calcination. Other changes, including growth or further aggregation of the plates have not been observed. EDXS and AAS again only detect Si, Zn, and O (EDXS) or Si and Zn (AAS), respectively, and therefore support our XRD structure assignment summarized in Table 1.

During the mineralization process an oily second phase develops on the surface of the reaction solution. NMR reveals that the oil is tributylamine. As the tributylammonium cation is known to eliminate 1-butene at high temperatures, the formation of the oily tributylamine phase is not surprising. As amines (although usually primary or secondary amines) can coordinate to transition metals, it is possible that some of the organic is incorporated into the zinc silicates formed here. However, both thermal and elemental analysis as well as SSNMR and IR show no evidence for incorporation of organic material.

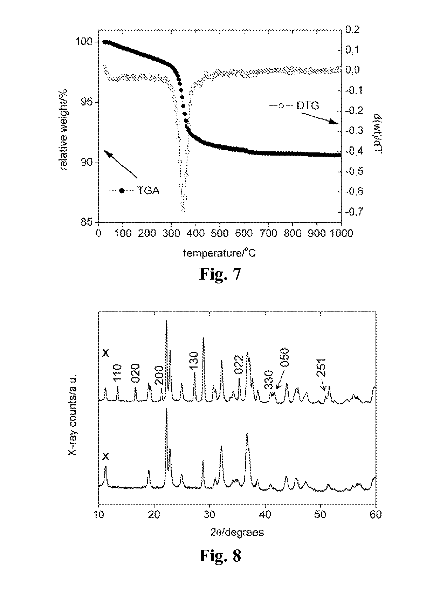

Figure 7 shows thermogravimetric analysis (TGA) and derivative (DTG) data from an as-precipitated sample (TGA and DTG curves of the as-prepared sample in air; the relative weight scale (TGA) is only from 85 to 101 wt%). TGA curves show a slow but continuous weight loss from room temperature to ca. 350 °C, which we assign to the loss of bound surface water and possibly to the dehydration of γ-zinc hydroxide $Zn(OH)_2$ to zincite ZnO and the beginning transformation of hemimorphite to willemite. This is supported by XRD measurements (Figure 1), which find that already calcination at 300 °C transforms the $Zn(OH)_2$ into ZnO, while the complete transformation of hemimorphite to willemite requires higher temperatures.

The TGA curves only show one sharp weight loss of 8 to 10 % of the original mass at 350 °C, which is followed by another, very slow weight loss up to 1000 °C. This indicates that a single process is responsible for the weight loss at 350 °C, presumably the transition from hemimorphite to willemite. The subsequent minor and very slow weight loss is assigned to the fact that complete transformation to willemite requires temperatures of 600 °C and more and the dehydration to willemite hence continues up to 1000 °C in the dynamic TGA experiment.

Elemental analysis finds only $0.647 \pm 0.006$ % of N, $0.283 \pm 0.002$ % of C, and $0.607 \pm 0.006$ % of H. The presence of these elements can be assigned to the incorporation of some organic material. These data further confirm that the weight losses observed in TGA are not due to incorporation of organic material into the minerals, but much rather that the above explanation of dehydration and phase transitions applies.

Figure 8 shows representative XRD patterns from samples isolated after 20 (bottom) and 30 hours (top). Only the reflections appearing between 20 and 30 hours of reaction time are labeled and (x) denotes the $\gamma$-$Zn(OH)_2$ 110 reflection, which is only found in the as-precipitated samples. Both patterns are essentially the patterns of hemimorphite and willemite, but a more detailed analysis shows that some hemimorphite reflections only appear late in the particle formation process. With the exception of 022 and 251, all reflections appearing late are h00, hk0 or 0k0 reflections. This suggests that the particles first grow preferentially along the crystallographic a- and b-axes and only after some time, further growth along the c-axis becomes more pronounced. Such a growth mechanism would also account for the platelike morphology, where the a- and b-axes run along the long and short axes of the hemimorphite nanocrystals. The c-axis would then be parallel to the shortest particle axis, the thickness of the plates.

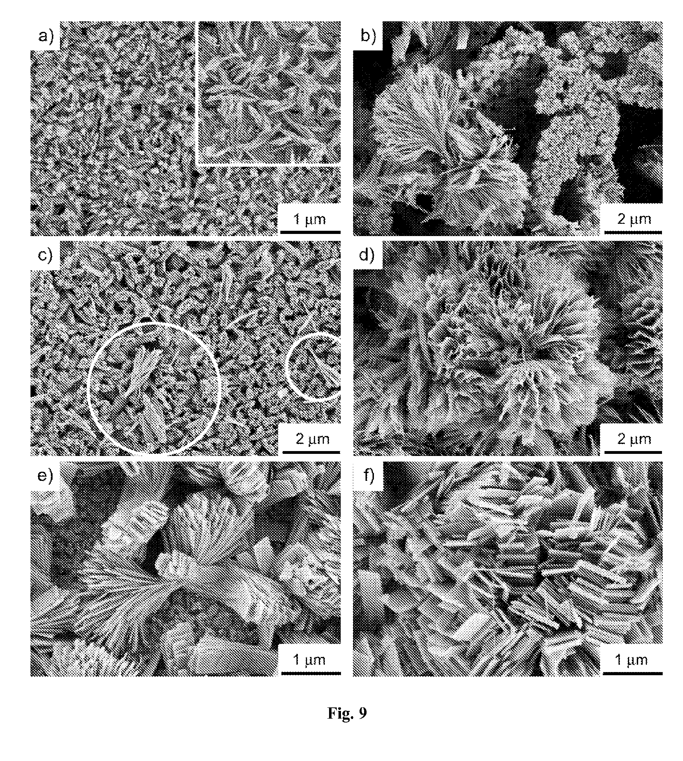

Figure 9 shows SEM images of powders isolated after different reaction times, which support the XRD data, as the first particles have acicular or thread-like shapes and only later the characteristic plate morphology is observed. The samples are isolated after different reaction times: (a) 10 hours, (b) 16 hours, (c, d) 26 hours, (e) 20 hours, (f) 30 hours. Inset in (a) is a magnified view of the "ellipsoidal" first generation particles, which are made up of threadlike primary building blocks. The circles in (c) highlight a first generation of threads that start to form a wedge (see text for details). The images clearly show that the morphology of the particles observed after 30 and more hours of reaction time is preceded by other particle morphologies and forms trough various intermediate stages. Initially, small rodlike particles are observed, but soon thereafter, more complex shapes evolve. The morphogenesis is complex and several steps appear to strongly overlap. For example, a fraction of the samples obtained after 20 hours of reaction time already exhibits the morphology, which is also found after 30 and more hours (Figure 9 e). However, some fraction of the material obtained after 26 hours still resembles the sample observed after 10 or 16 hours (Figure 9 c, d). After 30 and more hours of reaction time, the individual plates making up the final, larger particles are essentially identical to plates observed after 20 or 25 hours, only the edges have developed further to yield well-defined plate-like building blocks.

SEM also reveals that the final particles most likely do not exclusively grow via self-similar crystallization. After short reaction times, we only observe small particles. Later, we also observe particles that appear to have grown from a rod-like primary particle but exhibit a first set of fine threadlike features, which overall have a wedge-like shape. These features become more complex and exhibit 2D and 3D assemblies of threads which overall have a dumbbell shape. However, in parallel to the formation of the assembly and growth of the threads to wedges and finally dumbbells, the individual threads also appear to evolve from a threadlike to a plate-like morphology (Figure 9 f).

SEM shows that parts of all samples have a flat bottom. Furthermore, the majority of the sample does not grow from solution, but forms a rather thick white film on the glass wall of the flasks, while the solution remains almost clear. Even after thorough cleaning, the glass flasks remain somewhat turbid. These observations suggest that the silicates form by direct reaction of TBAH, $Zn^{2+}$, and the glass wall. This is further supported by the fact that no additional silicon source was added and by control experiments, which rule out contamination from silicon grease and other third sources.

As the reaction of hydroxide ions with glass is well known, the reaction of TBAH with the glass is not surprising as such. The interesting point, however, is that this approach represents to date the simplest approach for the fabrication of complex zinc silicate nanomaterials with tunable morphologies. As shown above, morphologies can be tuned by simple variation of the reaction time.

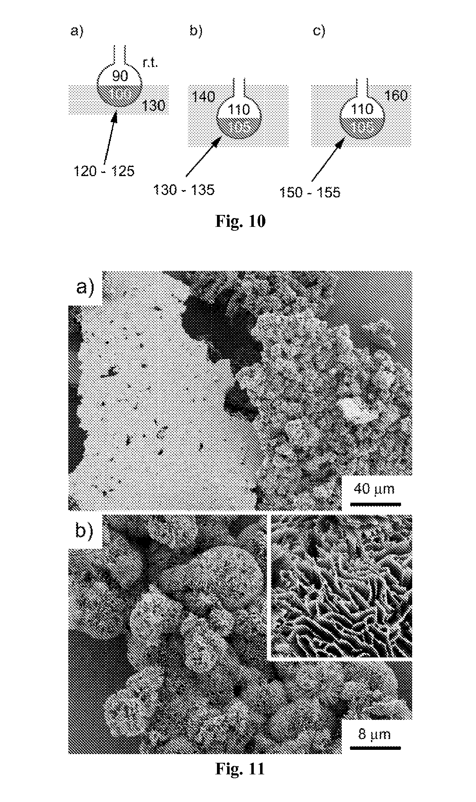

Alternatively, morphologies can also be tuned by the reaction temperature. All samples discussed so far were grown at a temperature of the glass wall of 130 to 135 °C. The glass flasks were immersed into the oil bath in order to also achieve a higher temperature of the glass wall above the liquid phase. This results in a different thermal environment, which dramatically affects the outcome of the reaction. Figure 10 summarizes the different reaction conditions that lead to the different morphologies observed in the precipitates: (a) mineralization of ZnO hollow tubes on the glass wall above the reaction mixture, (b) Formation of the silicate platelets, Figures 3 to 5, and (c) Formation of the silicate "sponges", Figure 11. The given numbers are temperatures in °C and arrows denote the temperatures of the glass walls of the flasks.

Figure 11 is an example of a sample grown at 150 to 155 °C (panel c in Figure 10), which shows that reactions conducted at higher temperatures yield a completely different morphology of the precipitate. Panel (a) shows two large pieces of the white film isolated after mineralization. The left part shows the flat bottom and the right part is a piece of the film with the upper side upwards. Panel (b) is a magnified view of the right area in (a). The inset is a magnified view of the lamellae forming the "sponges". Unlike samples grown at lower temperatures, the samples obtained here do not exhibit the typical plate morphology, but rather have a flower- or sponge-like morphology, where the individual sponges are composed of fine lamellae that are closely connected and form a dense array of "tubular" units.

The observation that the solution is only slightly turbid in all cases is explained by the fact that most of the mineralization takes place as a heterogeneous growth process on the glass wall of the flask. The slight turbidity is most likely due to the formation of $\gamma$-$Zn(OH)_2$ nanoparticles, which do not form on the glass wall, but in solution. However, as the amount of precipitate recovered from the solution is very small, an unambiguous assignment of its structure is not possible.

The formation of the zinc silicate particles from TBAH is a complex process. Despite this, SEM, SSNMR, and XRD allow for the development of a first growth model. The fact that zinc silicates and not zinc oxide forms, the presence of large particle agglomerates with a flat bottom, the formation of a thick white film on the glass wall, and the fact that the solution is only slightly turbid during the reaction suggests that nucleation and growth of the zinc silicate takes place at the hot glass wall of the reaction flask. SEM shows that initially, small ellipsoidal particles composed of thread-like primary building blocks form. As the reaction proceeds, the particles grow into wedge- and dumbbell-like particles, which are still composed of small threads. These threads then evolve into sheet-like elements, which become the building blocks of 3D flowerlike structures. These finally recrystallize to form the rectangular plates that make up the final particles.

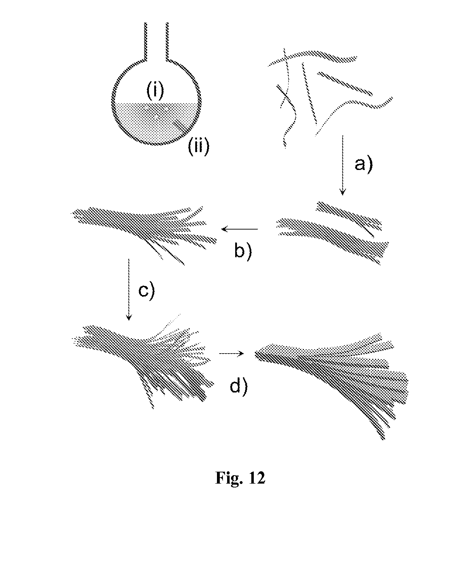

Overall, SEM provides evidence for a combination of self-similar growth processes with self-assembly of smaller particles (ellipsoids into threads into larger 2D and 3D structures). SEM also provides evidence that once the skeleton of the final morphology exists, further particle growth most likely occurs via heterogeneous nucleation on the existing skeleton or via redissolution-reprecipitation of parts of the sample. As SSNMR shows that the dominating species is hemimorphite, it is likely that morphogenesis is largely controlled by hemimorphite and not by willemite growth. Figure 12 illustrates the proposed growth model: (i) $Zn(OH)_2$ nucleates in solution and essentially persists as small particles in suspension throughout the reaction and (ii) Hemimorphite nucleates on the glass wall of the flask. (a) Initially, small hemimorphite threads form (Figure 8 a, inset) and relatively quickly aggregate into bundles of threads, which (b) then aggregate further into larger bundles (Figure 8 c, circles). These aggregates transform (c) into the more complex "flowerlike" aggregates (Figure 8 d), which then (d) further transform into the final larger complex structures of nano- to micrometer-sized plates. Drawings are not to scale.

The current procedure provides access to potentially interesting hemimorphite and willemite morphologies. They can easily be tuned by variation of the reaction time and temperature. Furthermore, the particles are stable with respect to calcination and do not aggregate further or change their morphology when heated. As a result, our approach is a viable pathway towards non-spherical zinc silicates with complex morphologies with useful properties like high thermal stability and high porosity. As hemimorphite has a strong pyroelectric coefficient, low permittivity and loss, and weak piezoelectricity, hemimorphite with the high surface areas accessible with our approach could for example be an appealing sensor material.

**Claims**

1.  A method of preparation of zinc silicate microcrystals comprising the steps of:

    (i) preparing an ionic liquid comprising or composed of $Zn(OAc)_2$ dihydrate and tetrabutyl ammonium hydroxide (TBAH, $N(C_4H_9)_4OH*30\ H_2O$);
    (ii) subsequent or simultaneously to step (i), adding a source of amorphous $SiO_2$ to the ionic liquid; and
    (iii) heating of the ionic liquid such that a surface temperature of the amorphous $SiO_2$ source is in a range from 130°C to 180°C.

2.  The method of claim 1, wherein the surface temperature of the amorphous $SiO_2$ source in step (iii) is in a range from 130°C to 160°C.

3.  The method of claim 1 or 2, wherein the step (iii) of heating is maintained for at least 10 h.

4.  The method of any of the preceding claims, wherein the method further comprises the step of:

    (iv) subsequent to step (iii), separation of the precipitate from the ionic liquid and calcination of the precipitate.

5.  The method of claim 4, wherein a temperature during the calcination of step (iv) is in the range of 300°C to 1.500°C.

6.  The method of any of the preceding claims, wherein the source of amorphous $SiO_2$ is a silicate glass.

7.  The method of any of the preceding claims, wherein the source of amorphous $SiO_2$ is a $SiO_2$ particle.

8.  Zinc silicate microcrystals produced by the method of any of claims 1 to 7.

9.  Zinc silicate microcrystals comprising:

    a) a phase of willemite $Zn_2SiO_4$
    b) a phase of ZnO and/or $\gamma$-$Zn(OH)_2$; and
    c) optionally, a phase of hemimorphite $Zn_4Si_2O_7(OH)_2*n\ H_2O$.

10. The zinc silicate microcrystals of claims 8 or 9, wherein the microcrystals have a morphology which comprises rectangular plate-like crystals.

11. The zinc silicate microcrystals of claim 10, wherein the rectangular plate-like crystals have a length of 100 nm or more.

12. The zinc silicate microcrystals of claims 10 or 11, wherein a plurality of the rectangular plate-like crystals is combined to an overall morphology showing a dumbbell-like structure.

13. The zinc silicate microcrystals of claims 8 or 9, wherein the microcrystals have a sponge-like morphology.

14. Use of the zinc silicate microcrystals of any of claims 8 to 13 as a catalyst or a substrate for a catalyst.

15. $SiO_2$ particle with a surface, which at least in parts is composed of zinc silicate microcrystals of any of claims 8 to 13.


**Amended claims in accordance with Rule 137(2) EPC.**

1. A method of preparation of zinc silicate microcrystals comprising the steps of:

    (i) preparing an ionic liquid comprising or composed of $Zn(OAc)_2$ dihydrate and tetrabutyl ammonium hydroxide (TBAH, $N(C_4H_9)_4OH*30\ H_2O$);
    (ii) subsequent or simultaneously to step (i), adding a source of amorphous $SiO_2$ to the ionic liquid; and
    (iii) heating of the ionic liquid such that a surface temperature of the amorphous $SiO_2$ source is in a range from 130°C to 180°C.

**2.** The method of claim 1, wherein the surface temperature of the amorphous $SiO_2$ source in step (iii) is in a range from 130°C to 160°C.

**3.** The method of claim 1 or 2, wherein the step (iii) of heating is maintained for at least 10 h.

**4.** The method of any of the preceding claims, wherein the method further comprises the step of:

(iv) subsequent to step (iii), separation of the precipitate from the ionic liquid and calcination of the precipitate.

**5.** The method of claim 4, wherein a temperature during the calcination of step (iv) is in the range of 300°C to 1.500°C.

**6.** The method of any of the preceding claims, wherein the source of amorphous $SiO_2$ is a silicate glass.

**7.** The method of any of the preceding claims, wherein the source of amorphous $SiO_2$ is a $SiO_2$ particle.

**8.** Zinc silicate microcrystals produced by the method of any of claims 1 to 7.

**9.** The zinc silicate microcrystals of claim 8, wherein the microcrystals have a morphology which comprises rectangular plate-like crystals.

**10.** The zinc silicate microcrystals of claim 9, wherein the rectangular plate-like crystals have a length of 100 nm or more.

**11.** The zinc silicate microcrystals of claims 9 or 10, wherein a plurality of the rectangular plate-like crystals is combined to an overall morphology showing a dumbbell-like structure.

**12.** The zinc silicate microcrystals of claim 8, wherein the microcrystals have a sponge-like morphology.

**Fig. 1**

**Fig. 2**

**Fig. 3**

Fig. 4

**Fig. 5**

**Fig. 6**

**Fig. 7**

**Fig. 8**

**Fig. 9**

Fig. 10

Fig. 11

**Fig. 12**

Europäisches
Patentamt

European
Patent Office

Office européen
des brevets

# EUROPEAN SEARCH REPORT

Application Number

EP 08 15 6723

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CAI, Y., WEATHERSPOON, M. ERNST, E., HALUSKA, M., SNYDER, R., SANDHAGE, K.: "3-D Microparticles of Batio3 and Znsio4 via chemical (sol-gel, acetate, or hydrothermal) conversion of biological (diatom) templates" CERAMIC ENGINEERING AND SCIENCE PROCEEDINGS, vol. 27, no. 8, 2007, pages 49-56, XP009106721 | 9,15 | INV. C01B33/20 |
| Y | * the whole document * | 14 | |
| A | | 1-8, 10-13 | |
| | ----- | | |
| X | CAI, YE ET AL: "Zn2SiO4 -coated microparticles with biologically-controlled 3D shapes" PHYSICA STATUS SOLIDI A: APPLICATIONS AND MATERIALS SCIENCE , 202(10), R105-R107 CODEN: PSSABA; ISSN: 0031-8965, 2005, XP002498624 | 9,15 | |
| | | | TECHNICAL FIELDS SEARCHED (IPC) |
| Y | | 14 | |
| A | * the whole document * | 1-8, 10-13 | C01B |
| | ----- | | |
| X | EL MIR ET AL: "Synthesis and luminescence properties of ZnO/Zn2SiO4/SiO2 composite based on nanosized zinc oxide-confined silica aerogels" PHYSICA B. CONDENSED MATTER, AMSTERDAM, NL, vol. 388, no. 1-2, 25 November 2006 (2006-11-25), pages 412-417, XP005781017 ISSN: 0921-4526 | 9,15 | |
| A | * the whole document * | 1 | |
| | ----- | | |
| | -/-- | | |

The present search report has been drawn up for all claims

| Place of search | Date of completion of the search | Examiner |
|---|---|---|
| Munich | 7 October 2008 | Schmitt, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 08 15 6723

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 112 964 A (SAKAI CHEMICAL INDUSTRY CO [JP]) 4 July 2001 (2001-07-04) * paragraphs [0036], [0037] * ----- | 9 | |
| X | WEBER L ET AL: "Investigation of chemical microstructures in the system ZnO@?Zn2SiO4 by photo-emission electron microscopy and X-ray diffraction" MICRON (1969), PERGAMON, vol. 6, no. 3-4, 1 January 1975 (1975-01-01), pages 129-139, XP022641085 ISSN: 0047-7206 [retrieved on 1975-01-01] * page 135; figures 2,3; table 1 * ----- | 9 | |
| X | NGUYEN, NGOC-HUAN ET AL: "Effect of Zn/Si ratio on the microstructural and microwave dielectric properties of Zn2SiO4 ceramics" JOURNAL OF THE AMERICAN CERAMIC SOCIETY , 90(10), 3127-3130 CODEN: JACTAW; ISSN: 0002-7820, 2007, XP002498625 | 9 | |
| Y A | * page 3128; figures 1,2 * ----- | 14 1 | TECHNICAL FIELDS SEARCHED (IPC) |
| X | WEI, QING ET AL: "Hollow Microspherical Architectures of Closely Packed and Radially Well-Aligned Zn2SiO4 Nanowires with and without ZnO Nanocrust" JOURNAL OF PHYSICAL CHEMISTRY C , 111(5), 1924-1928 CODEN: JPCCCK; ISSN: 1932-7447, 2007, XP002498626 * the whole document * ----- | 9 | |

-/--

The present search report has been drawn up for all claims

| Place of search | Date of completion of the search | Examiner |
|---|---|---|
| Munich | 7 October 2008 | Schmitt, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 08 15 6723

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU, XIAOLIANG ET AL: "Formation mechanism of Zn2SiO4 crystal and amorphous SiO2 in ZnO /Si system" JOURNAL OF PHYSICS: CONDENSED MATTER , 15(40), L607-L613 CODEN: JCOMEL; ISSN: 0953-8984, 2003, XP002498627 * the whole document * | 9 | |
| Y | DE 197 26 667 A1 (BASF AG [DE]) 24 December 1998 (1998-12-24) | 14 | |
| A | * page 3, line 44 - line 68; example 1 * | 1 | |
| D,A | Z. LI, A. GESSNER, J.-P. RICHTERS, J. KALDEN, T. VOSS, C. KÜBEL, A. TAUBERT: "Hollow Zinc Oxide Mesocrystals from an Ionic Liquid Precursor (ILP)" ADVANCED MATERIALS, vol. 20, 7 March 2008 (2008-03-07), pages 1279-1285, XP002498628 * the whole document * | 1-13 | |
| A | A. TAUBERT, Z. LI: "Inorganic materials from ionic liquids" DALTON TRANSACTIONS, 2007, pages 723-727, XP002498629 * the whole document * | 1-13 | TECHNICAL FIELDS SEARCHED (IPC) |
| T | Z. LI, Y. KHIMYAK, A. TAUBERT: "Lessons from a "Failed" Experiment: Zinc Silicates with complex Morphology by Reaction of Zinc Acetate, the Ionic Liquid Precursor (ILP) Tetrabutylammonium Hydroxide (TBAH), and Glass" MATERIALS, vol. 1, 29 August 2008 (2008-08-29), pages 3-24, XP002498630 * the whole document * | 1-15 | |

The present search report has been drawn up for all claims

| Place of search | Date of completion of the search | Examiner |
|---|---|---|
| Munich | 7 October 2008 | Schmitt, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

**ANNEX TO THE EUROPEAN SEARCH REPORT
ON EUROPEAN PATENT APPLICATION NO.**

EP 08 15 6723

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2008

| Patent document cited in search report | | Publication date | Patent family member(s) | | Publication date |
|---|---|---|---|---|---|
| EP 1112964 | A | 04-07-2001 | WO | 0069776 A1 | 23-11-2000 |
| | | | US | 6660380 B1 | 09-12-2003 |
| DE 19726667 | A1 | 24-12-1998 | AU | 8626098 A | 04-01-1999 |
| | | | CN | 1261341 A | 26-07-2000 |
| | | | WO | 9858894 A1 | 30-12-1998 |
| | | | EP | 0993431 A1 | 19-04-2000 |
| | | | ES | 2175744 T3 | 16-11-2002 |
| | | | JP | 2002504915 T | 12-02-2002 |
| | | | US | 6211416 B1 | 03-04-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Taubert, A. ; Palivan, C. ; Casse, O. ; Gozzo, F. ; Schmitt, B.** *J. Phys. Chem. C,* 2007, vol. 111, 4077
- **Taubert, A. ; Arbell, I. ; Mecke, A. ; Graf, P.** *Gold Bulletin,* 2006, vol. 39, 205
- **Zhu, H. ; Huang, J.-F. ; Pan, Z. ; Dai, S.** *Chem. Mater.,* 2006, vol. 18, 4473

- **Li, Z. ; Geßner, A. ; Richters, J.-P. ; Kalden, J. ; Voss, T. ; Kübel, C. ; Taubert, A.** *Adv. Mater.,* 2008, vol. 20, 1279
- **Roy, A. ; Polarz, S. ; Rabe, S. ; Rellinghaus, B. ; Zähres, H. ; Kruis, F. E. ; Driess, M.** *Chem. Eur. J.,* 2004, vol. 10, 1565
- **Wei, Q. ; Meng, G. ; Ye, M. ; An, X. ; Hao, Y. ; Zhang, L.** *J. Phys. Chem. C,* 2007, vol. 111, 1924